# EUROPÄISCHE PATENTSCHRIFT

(11) **EP 3 203 097 B1**
(45) Veröffentlichungstag und Bekanntmachung des Hinweises auf die Patenterteilung: **17.04.2019**
(21) Anmeldenummer: 17154190.7
(22) Anmeldetag: 01.02.2017
(51) Int. Cl.: F16C 29/04, F16C 33/40, A47B 88/493

(54) **TELESKOPAUSZUG MIT KUGELKÄFIG**
TELESCOPIC DRAWER RUNNER INLUDING BALL RETAINER
RALLONGE TÉLÉSCOPIQUE AVEC CAGE À BILLES

(30) Priorität: 02.02.2016 DE 102016101811
(43) Veröffentlichungstag der Anmeldung: 09.08.2017
(73) Patentinhaber: Accuride International GmbH, 65582 Diez/Lahn (DE)
(72) Erfinder: Neidhöfer, Patrick, 56377 Seelbach (DE); Quirein, Thomas, 65582 Diez (DE)
(74) Vertreter: WSL Patentanwälte Partnerschaft mbB

(56) Entgegenhaltungen:
- CN-Y- 2 911 303
- DE-A1- 4 219 026
- DE-A1- 4 228 579
- DE-A1-102007 017 786
- DE-A1-102012 211 205
- DE-T2- 60 209 163
- GB-A- 2 177 165

## Beschreibung

Die vorliegende Erfindung betrifft einen Teleskopauszug mit in einer Längsrichtung gegeneinander verfahrbaren Schienenelementen und einem Kugelkäfig, wobei der Kugelkäfig wenigstens einen ersten Halteabschnitt aufweist, der sich in Längsrichtung erstreckt, und wobei in dem ersten Halteabschnitt Durchbrechungen vorgesehen sind, die entlang der Längsrichtung nebeneinander angeordnet und durch Stege voneinander getrennt sind, und in welchen Wälzkörper angeordnet sind, wobei der Kugelkäfig wenigstens vier Wälzkörper in dem ersten Halteabschnitt aufweist sowie einen Teleskopauszug mit einem derartigen Kugelkäfig.

Im Stand der Technik, wie beispielsweise in der GB 2 177 165 A1 dargestellt, die einen Kugelkäfig gemäß dem Oberbegriff des unabhängigen Anspruchs 1 zeigt, sind verschiedenste Ausgestaltungen von Kugelkäfigen für die Aufnahme und das Halten von Wälzkörpern, insbesondere Kugeln, bei kugelgelagerten Teleskopauszügen bzw. Linearführungen bekannt. Durch den Kugelkäfig werden Wälzkörper in Laufrichtung, die der Längsrichtung von Schienenelementen entspricht, in einem bestimmten Abstand zueinander gehalten und auch allgemein ein Herausfallen der Wälzkörper aus dem Teleskopauszug verhindert.

Es hat sich nun gezeigt, dass bei bestimmten Belastungszuständen der Teleskopschienen eine Unstetigkeit der Laufeigenschaften auftritt, insbesondere nach einer zeitlich längeren Einwirkung der Belastung senkrecht zur Laufrichtung der Schienen, d.h. senkrecht zur Längsrichtung. Das bedeutet, dass bei dem Verschieben einzelner Schienenelemente gegeneinander ein Ruckeln zu spüren ist, wobei der Grund hierfür noch nicht vollständig verstanden ist. Weiter wurde beobachtet, dass dieses Ruckeln mit steigender Anzahl von verwendeten Kugeln zunimmt.

Die DE 10 2007 017 786 A1 offenbart eine offenbart eine Linearführung mit einer Synchron-Verbindungseinrichtung, wobei ein darin eingebauter Verbinder in einem Spritzgussverfahren hergestellt wird. Ein Spritzgusswerkzeug besteht aus einem Oberteil, einem Unterteil sowie einem Formstift. Aufgrund der Gestaltung des Formstiftes mit einem variablen Querschnitt weist der Verbinder wenigstens zwei ringförmige Körper unterschiedlicher Radialdicke sowie einen Verbindabschnitt auf, was dazu führt, dass die Abstände der zwischen den beiden ringförmigen Körpern aufgenommen Wälzkörper nicht völlig gleich sind.

Die DE 42 19 026 A1 offenbart eine Linearführung hergestellt aus einer Welle mit einer zylindrischen Außenwandung, einer Außenbahn mit einer zylindrischen inneren Umfangswandung, einem zylindrischen Käfig, der zur Axialverstellung innerhalb eines ringförmigen Raumes zwischen der Außenwandung und der Innenwandung eingefügt ist, und einer großen Anzahl von Kugeln, die zur Rotation im Käfig zurückgehalten werden und im Kontakt mit der Außenwandung und der Innenwandung stehen. Die Kugeln sind an axial entgegengesetzten Endabschnitten des Käfigs dicht davor vorgesehen.

Aus der DE 602 09 163 T2 ist eine Wälzelementreihe mit einer Mehrzahl von sphärischen Wälzelementen und vier Arten von Halteelementen bekannt. Die Element-zu-Element-Dicken der Halteelemente sind unterschiedlich.

Zudem ist aus der DE 42 028 579 A1 ein Käfigteil für die Verwendung in einer Linearbewegungseinheit, die eine Schiene, einen Schlitten und eine Vielzahl von hierzwischen angeordneten Wälzelementen umfasst, bekannt. Das Käfigteil besteht im Wesentlichen aus einer längs verlaufenden rechteckigen Platte mit vorbestimmter Dicke und Breite. Die Käfigplatte besitzt eine Vielzahl von Taschen, in denen Wälzelemente aufgenommen und in Position gehalten werden. Die Taschen haben in Querrichtung eine erste Größe, geringfügig größer als die charakteristische Größe der Wälzelemente, z.B. der Durchmesser im Fall von Kugeln, und in Längsrichtung eine zweite Größe, die wesentlich größer ist als die erste Größe, so dass die Taschen im Allgemeinen die Form eines Schlitzes haben. Mit dieser Struktur ist der Verschiebewiderstand des Käfigteils und somit der Linearbewegungseinheit signifikant reduziert.

Ausgehend von diesem Stand der Technik liegt der Erfindung die Aufgabe zu Grunde, Teleskopschienen bereitzustellen, bei denen auch nach längerer Einwirkung mechanischer Belastungen keine oder nur deutlich reduzierte Laufunstetigkeiten auftreten.

Diese Aufgabe wird erfindungsgemäß durch eine Teleskopschiene gemäß dem nachstehenden Anspruch 1 gelöst.

Es hat sich überraschenderweise gezeigt, dass bereits bei Verwendung eines Kugelkäfigs, der so gestaltet ist, dass er wenigstens vier Wälzkörper mit Abständen bereitstellt, die voneinander verschieden sind und die weiteren oben beschriebenen Bedingungen erfüllen, ein deutlich reduziertes Ruckeln und damit eine größere Stetigkeit beim Verschieben von Teleskopauszügen mit derartigen Kugelkäfigen bereitgestellt wird, auch wenn diese überlängere Zeiträume mechanischen Belastungen ausgesetzt waren.

Es versteht sich, dass es sich bei den Abständen der Wälzkörper zueinander vorzugsweise um die Abstände der Drehachsen der Wälzkörper handelt. Um diese Drehachsen drehen sich die jeweiligen Wälzkörper beim Verschieben von Schienenelementen eines Teleskopauszugs in Längsrichtung, d.h. in Laufrichtung, wenn sie in einem Kugelkäfig in dem Teleskopauszug eingebracht sind.

Es ist dem Fachmann bekannt, dass es auch bei der Fertigung von Kugelkäfigen zu fertigungsbedingten Abweichungen kommen kann. Fertigungsbedingte Abweichungen beim Formen von Durchbrechungen in derartigen Kugelkäfigen betragen typischerweise im bis zu 5 % bzw. bis zu 3 %, bezogen auf die Länge des Abstandes zwischen den Mittelpunkten der Durchbrechungen. Derartige Abweichungen, die im Bereich von Fertigungstoleranzen liegen, stellen im Allgemeinen keine "verschiedenen Abstände" im Sinne der Erfindung dar. Gleiches trifft auch auf die Vielfachen und Summen von Abständen zu.

In einer Ausführungsform werden als Wälzkörper Kugeln oder kreiszylinderförmige Elemente (Walzen) eingesetzt.

In einer Ausführungsform weist der Kugelkäfig wenigstens fünf Wälzkörper in dem ersten Halteabschnitt auf, wobei die Abstände von wenigstens fünf in Längsrichtung aufeinanderfolgenden Wälzkörpern zueinander jeweils voneinander verschieden sind, wobei die Abstände der wenigstens fünf in Längsrichtung aufeinanderfolgenden Wälzkörper zueinander jeweils kein ganzzahliges Vielfaches eines anderen Abstandes dieser fünf aufeinanderfolgenden Wälzkörper und keine Summe aus zwei aufeinanderfolgenden Abständen dieser wenigstens fünf aufeinanderfolgenden Wälzkörper sind.

Der Kugelkäfig weist weiter einen Basisabschnitt des Kugelkäfigs und einen zweiten Halteabschnitt auf, wobei sich der erste und der zweite Halteabschnitt seitlich des Basisabschnittes in Längsrichtung erstrecken und wobei der zweite Halteabschnitt Durchbrechungen für die Aufnahme von Wälzkörpern aufweist, die entlang der Längsrichtung nebeneinander angeordnet und durch Stege voneinander getrennt sind. Es versteht sich, dass die Halteabschnitte an gegenüberliegenden Seiten des Basisabschnittes angeordnet sind. Mit anderen Worten, der Kugelkäfig weist im Wesentlichen einen U-förmigen Querschnitt auf, wobei die beiden freien Schenkel durch den ersten und den zweiten Halteabschnitt gebildet werden, die durch den Basisabschnitt miteinander verbunden sind.

In einer Ausführungsform sind die Durchbrechungen und Stege in dem zweiten Halteabschnitt sowie die in den Durchbrechungen angeordneten Wälzkörper jeweils gegenüber denen in dem ersten Halteabschnitt angeordnet. Es hat sich gezeigt, dass derartig symmetrische Kugelkäfige für die Laufeigenschaften nicht abträglich sind und zudem einfach herzustellen sind. Vorzugsweise sind die Halteabschnitte auf gegenüberliegenden Seiten des Basisabschnittes zueinander spiegelsymmetrisch, wobei die Spiegelachse parallel zur Längsrichtung und in einer zu dem Basisabschnitt senkrechten Ebene verläuft. Derartige symmetrische Kugelkäfige können einfach in Teleskopauszüge eingebaut werden, ohne speziell auf deren Orientierung achten zu müssen.

In einer Ausführungsform sind wenigstens die Hälfte der Abstände der Wälzkörper in dem ersten Halteabschnitt, vorzugsweise wenigstens drei Viertel, besonders bevorzugt alle, zueinander jeweils voneinander verschieden, wobei wenigstens die Hälfte, vorzugsweise wenigstens drei Viertel, besonders bevorzugt alle der Abstände kein ganzzahliges Vielfaches eines anderen Abstandes sind und wenigstens die Hälfte, vorzugsweise wenigstens drei Viertel, besonders bevorzugt alle der Abstände keine Summe aus zwei benachbarten, aufeinanderfolgenden Abständen eines jeweiligen Abstandes sind.

Derartige Ausführungen umfassen, dass wenn wenigstens die Hälfte der Abstände der Wälzkörper die oben beschriebenen Anforderungen erfüllen, die Hälfte der Wälzkörper, vorzugsweise drei Viertel, die diese Anforderungen erfüllen, alle aufeinanderfolgen.

Es sind jedoch auch Ausführungsformen umfasst, bei denen Gruppen von Abständen, auf die diese Angaben zutreffen, durch einen oder mehrere Abstände voneinander getrennt sind, auf die diese Angaben nicht zutreffen, solange diese Angaben auf Abstände zwischen wenigstens vier in Längsrichtung aufeinanderfolgenden Wälzkörpern zutreffen.

Eine Ausführungsform, bei der diese Aussage auf wenigstens die Hälfte der Abstände zutrifft, ist ein Kugelkäfig, dessen Wälzkörper in dem ersten Halteabschnitt so angeordnet sind, dass in dem ersten Halteabschnitt senkrecht zur Längsrichtung eine Spiegelachse entsteht, zu der die Durchbrechungen und Stege und in den Durchbrechungen angeordneten Wälzkörper spiegelsymmetrisch angeordnet sind. Es versteht sich, dass diese Spiegelachse durch die Drehachse eines Wälzkörpers oder zwischen zwei Wälzkörpern verläuft.

In einer Ausführungsform, auf der die obigen Angaben auf alle Wälzkörper zutreffen, nehmen die Abstände zwischen den Wälzkörpern von einem Ende des ersten Halteabschnittes zu dem zweiten Ende des ersten Halteabschnitts in Längsrichtung kontinuierlich ab oder kontinuierlich zu.

In einer Ausführungsform umfasst der erste Halteabschnitt höchstens 30, bevorzugt höchstens 25, besonders bevorzugt höchstens 20 Wälzkörper. Es versteht sich, dass diese entlang der Längsrichtung nebeneinander angeordnet sind.

In einer Ausführungsform ist der Kugelkäfig aus einem Kunststoff hergestellt, ausgewählt aus der Gruppe, bestehend aus Polypropylen, Polyamid und Polyoxymethylen. Es hat sich gezeigt, dass aus diesen Kunststoffen gefertigte Kugelkäfige besonders stabil und langlebig sind.

In einer anderen Ausführungsform bestehen die Kugelkäfige aus einem metallischen Material, z.B. einem Metall oder einer Legierung, und sind vorzugsweise elektrolytisch verzinkt, z.B. gemäß DIN EN 10152.

In einer Ausführungsform nehmen die Abstände von in Längsrichtung aufeinanderfolgenden Wälzkörpern zueinander von einem ersten Ende des Kugelkäfigs zu einem zweiten Ende des Kugelkäfigs zu.

Die Abstände nehmen von in Längsrichtung aufeinanderfolgenden Wälzkörpern zueinander von beiden Enden des Kugelkäfigs zur Mitte des Kugelkäfigs zu. Durch eine solche Anordnung der Kugeln befinden sich mehr Kugeln, d.h. Kugeln mit geringeren Abständen zueinander, in Bereichen, in denen beim Verfahren der Teleskopschiene, insbesondere beim Ausfahren der Teleskopschiene größere Belastungen auftreten. Dies führt auch zu besseren Rolleigenschaften unter Belastung.

In einer Ausführungsform besteht der Teleskopauszug im Wesentlichen aus einer Außenschiene und einer Innenschiene und wenigstens einem dazwischen angeordneten Kugelkäfig, d.h. es handelt sich um einen sogenannten Teilauszug.

In einer Ausführungsform umfasst der Teleskopauszug eine Außenschiene und eine Innenschiene und wenigstens eine Mittelschiene sowie wenigstens einen zwischen zwei der genannten Schienen angeordneten oben beschriebenen Kugelkäfig und ggf. weitere Kugelkäfige.

In einer Ausführungsform entsprechen alle in einem Teleskopauszug vorhandenen Kugelkäfige einem oben beschriebenen Kugelkäfig.

In einer Ausführungsform bestehen die Schienen eines solchen Teleskopauszuges aus einem elektrogalvanisch verzinkten oder einem elektrogalvanisch verzinkten und passivierten Material. In einer Ausführungsform handelt es sich dabei um ein Basismaterial, bestehend aus Stahl oder Aluminium, dessen Oberfläche elektrogalvanisch verzinkt wurde.

Es hat sich gezeigt, dass insbesondere bei derartigen Schienen, die mit Hilfe einer Verzinkung korrosionsfest gemacht werden, ein positiver Effekt auf die Laufeigenschaften nach einer längeren zeitlichen Einwirkung mechanischer Belastungen erzielt werden kann, wenn oben beschriebene Kugelkäfige eingesetzt werden.

Weitere Vorteile, Merkmale und Anwendungsmöglichkeiten der vorliegenden Erfindung werden deutlich anhand der folgenden Beschreibung von Ausführungsformen und den dazugehörigen Figuren. Es zeigen:
Figur 1a: ein Vergleichsbeispiel eines Kugelkäfigs in einer perspektivischen Ansicht,
Figur 1b: eine schematische Darstellung des Vergleichsbeispiel eines Kugelkäfigs in einer seitlichen Ansicht,
Figur 2a: eine Ausführungsform eines Kugelkäfigs eines erfindungsgemäßen Teleskopauszugs in einer perspektivischen Ansicht,
Figur 2b: eine schematische Darstellung der Ausführungsform eines Kugelkäfigs eines erfindungsgemäßen Teleskopauszugs in einer seitlichen Ansicht,
Figur 2c: eine schematische Darstellung der Ausführungsform eines Kugelkäfigs eines erfindungsgemäßen Teleskopauszugs in einer Ansicht von oben,
Figur 3: eine schematische Darstellung einer weiteren Ausführungsform eines Kugelkäfigs eines erfindungsgemäßen Teleskopauszugs in einer Ansicht von oben und
Figur 4: eine schematische Darstellung eines Beispiels eines Kugelkäfigs eines nicht erfindungsgemäßen Teleskopauszugs in einer Ansicht von oben.

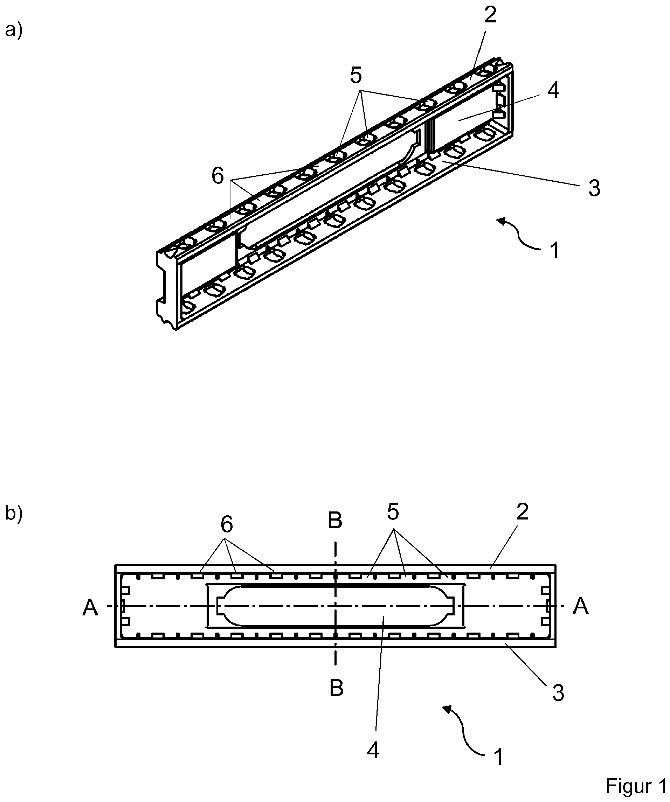

Figur 1 zeigt einen herkömmlichen Kugelkäfig 1 mit einem ersten Halteabschnitt 2 und einem zweiten Halteabschnitt 3 sowie einem die beiden Halteabschnitte verbindenden Basisabschnitt 4, von dem sich der erste und der zweite Halteabschnitt seitlich erstrecken. In dem ersten und zweiten Halteabschnitt sind Durchbrechungen 5 vorgesehen, die durch Stege 6 voneinander getrennt sind.

Bei dem in Figur 1a in einer perspektivischen Ansicht gezeigten herkömmlichen Kugelkäfig 1 sind die Abstände von aufeinanderfolgenden Durchbrechungen 5 jeweils gleich, was bedeutet, dass auch die Abstände von in den Durchbrechungen angeordneten Wälzkörpern, die in Figur 1 nicht dargestellt sind, zueinander identisch sind.

In Figur 1b ist deutlich erkennbar, dass der herkömmliche Kugelkäfig 1 sowohl eine Symmetrieachse A-A aufweist, die sich in Längsrichtung erstreckt. Das bedeutet, dass in dem ersten und zweiten Halteabschnitt angeordnete Durchbrechungen 5 jeweils gegenüberliegen und auch die Stege 6, die die Durchbrechungen 5 voneinander trennen, jeweils gegenüberliegen. Weiter weist der Kugelkäfig 1 eine weitere Symmetrieachse B-B auf, die sich senkrecht zur Längsrichtung erstreckt und ebenfalls durch die identischen Abstände zwischen den Durchbrechungen 5 bedingt ist.

Bei den in Figur 1a und 1b nicht dargestellten Wälzkörpern handelt es sich beispielsweise um Kugeln oder Walzen.

Es hat sich gezeigt, dass bei einer derartigen Anordnung von Durchbrechungen in einem Kugelkäfig 1 unter bestimmten Belastungen eine Verschlechterung der Laufeigenschaft einer Teleskopschiene mit einem solchen Kugelkäfig 1 auftritt, die sich insbesondere durch Ruckeln beim Bewege der Schienenelemente bemerkbar macht.

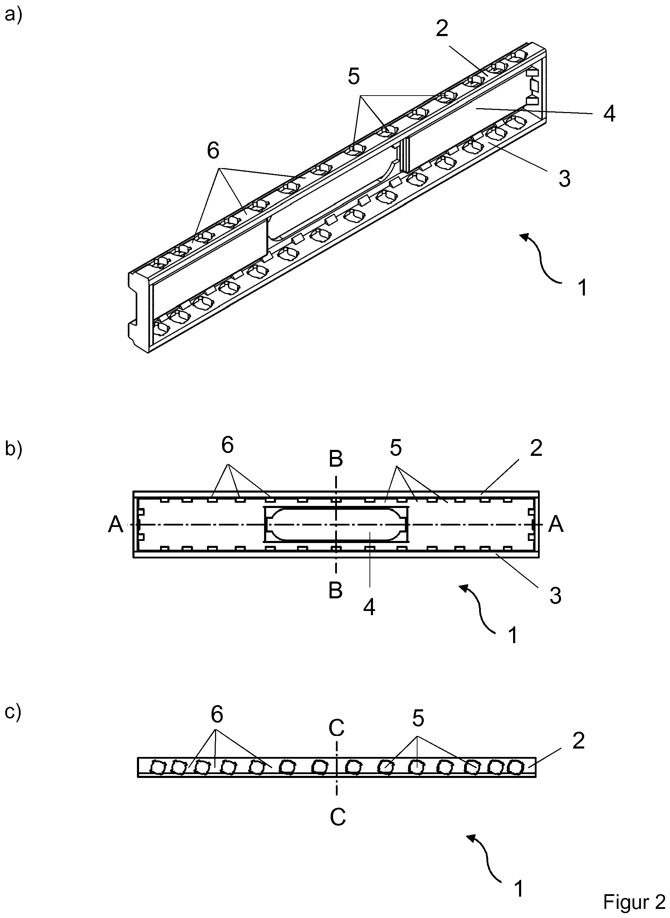

In Figur 2 ist eine erfindungsgemäße Ausführungsform eines Kugelkäfigs 1 dargestellt, wobei Figur 2a wie Figur 1a eine perspektivische Darstellung des Kugelkäfigs ist. Der Kugelkäfig 1 weist einen ersten Halteabschnitt 2 und einen zweiten Halteabschnitt 3 auf, die sich seitlich in Längsrichtung von einem Basisabschnitt 4 erstrecken. In den Halteabschnitten sind Durchbrechungen 5 vorgesehen, die durch Stege 6 voneinander getrennt sind.

Der Kugelkäfig weist pro Halteabschnitt jeweils 14 Durchbrechungen 5 auf. Das bedeutet, dass pro Halteabschnitt 14 Wälzkörper darin angeordnet werden können.

Bei der in Figur 2 gezeigten Ausführungsform sind die Durchbrechungen so gestaltet, dass sich insbesondere kugelförmige Wälzkörper zentral innerhalb einer Durchbrechung befinden, wobei die Drehachse eines Wälzkörpers bei einer Draufsicht von oben, wie in Figur 2c) dargestellt, auf dem Mittelpunkt einer Durchbrechung 5 liegt und pro Durchbrechung 5 jeweils nur eine Kugel als Wälzkörper vorgesehen ist.

In Figur 2b) ist zu erkennen, dass auch dieser Kugelkäfig 1 über eine in Längsrichtung verlaufende Symmetrieachse A-A verfügt, was bedeutet, dass Durchbrechungen in dem ersten Halteabschnitt 2 exakt gegenüber von Durchbrechungen 5 in dem zweiten Halteabschnitt 3 liegen. Das gleiche gilt auch für die Stege 6 in dem ersten Halteabschnitt 2 und dem zweiten Halteabschnitt 3. Weiter weist auch dieser Kugelkäfig 1 eine Symmetrieachse B-B senkrecht zur Längserstreckung auf, die durch einen Steg 6 verläuft, wobei jedoch ungeachtet dieser Symmetrieachse für diesen Kugelkäfig gilt, dass die Mittelpunkte von wenigstens 4 in Längsrichtung aufeinanderfolgenden Durchbrechungen 5 voneinander verschieden sind und diese Abstände auch jeweils kein ganzzahliges Vielfaches eines anderen Abstands dieser vier aufeinanderfolgenden Abstände von Mittelpunkten von Durchbrechungen und keine Summe aus zwei aufeinanderfolgenden Abständen von Mittelpunkten dieser vier aufeinanderfolgenden Durchbrechungen sind. Da wie oben beschrieben bei dieser Ausführungsform die Drehachsen der Wälzkörper bei einer Draufsicht von oben auf den Mittelpunkten der Durchbrechungen 5 liegen, trifft die obige Aussage auch auf die Abstände von in Figur 2 nicht dargestellten kugelförmigen Wälzkörpern zu.

Bei der in Figur 2 dargestellten Ausführungsform betragen die Abstände der Mittelpunkte der Durchbrechungen 5 in dem ersten Halteabschnitt 2 und dem zweiten Halteabschnitt 3 von links nach rechts: 7 mm, 7,9 mm, 8,8 mm, 9,6 mm, 10,3 mm, 10,9 mm, 11,4 mm, 10,9 mm, 10,3 mm, 9,6 mm, 8,8 mm, 7,9 mm und 7 mm.

Es hat sich gezeigt, dass bei einer derartigen Ausführungsform, bei der auf die Hälfte der Abstände zutrifft, dass sie voneinander ungleich sind und kein ganzzahliges Vielfaches voneinander sind, eine deutlich verbesserte Laufeigenschaft auch unter Belastungsbedingungen bereitgestellt werden kann im Vergleich zu Teleskopschienen mit einem in Figur 1 dargestellten Kugelkäfig.

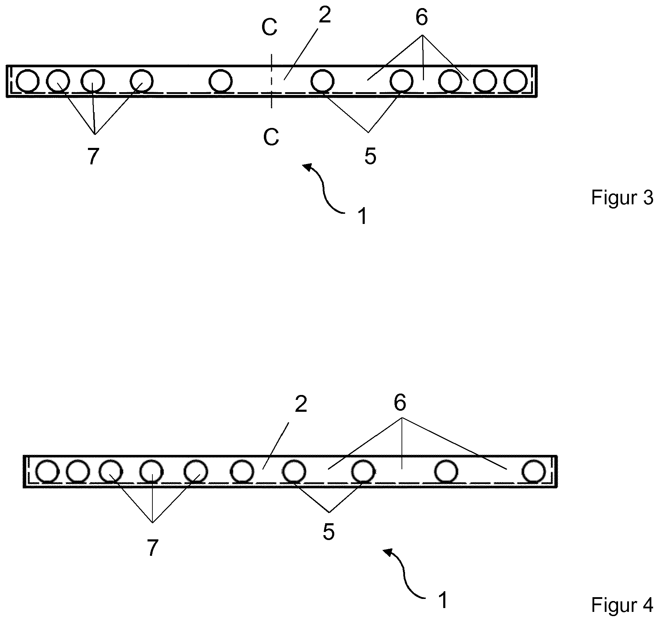

In Figur 3 ist schematisch eine weitere erfindungsgemäße Ausführungsform eines Kugelkäfigs 1 in einer Ansicht von oben dargestellt, wobei die in einem ersten Halteabschnitt 2 angeordneten Durchbrechungen 5, die durch Stege 6 voneinander getrennt sind, kugelförmige Wälzkörper beinhalten.

Diese Ausführungsform weist insgesamt zehn Wälzkörper 7 in dem ersten Halteabschnitt 2 auf, wobei in der Draufsicht von oben eine Symmetrieachse C-C vorhanden ist und die Abstände von in Längsrichtung aufeinanderfolgenden Wälzkörpern zueinander von beiden Enden des Kugelkäfigs zur Mitte des Kugelkäfigs, die bei der Symmetrieachse C-C liegt, zunehmen. Die Symmetrieachse C-C verläuft durch einen Steg 6, durch den Durchbrechungen 5 voneinander getrennt sind. Die Abstände der Wälzkörper zueinander betragen von links nach rechts 6,7 mm, 7,6 mm, 10,7 mm, 17,3 mm, 20,3 mm, 17,3 mm, 10,7 mm, 7,6 mm und 6,7 mm.

In Figur 4 ist ein Beispiel eines Kugelkäfigs 1 eines nicht erfindungsgemäßen Teleskopauszugs dargestellt, wobei die gleiche Ansicht wie in Figur 3 gewählt ist. Der Kugelkäfig 1 weist in seinem ersten Halteabschnitt 2 insgesamt zehn Durchbrechungen 5 auf, die durch Stege 6 voneinander getrennt sind. In den Durchbrechungen 5 sind kugelförmige Wälzkörper 7 angeordnet. Bei einer Draufsicht von oben ist keine Symmetrieachse vorhanden. Bei dieser Ausführungsform nehmen die Abstände von in Längsrichtung aufeinanderfolgenden Wälzkörpern zueinander von einem Ende des Kugelkäfigs 1 bis zu dem anderen Ende des Kugelkäfigs zu. Die Abstände betragen von links nach rechts 6,7 mm, 7,1 mm, 8,9 mm, 9,7 mm, 10,1 mm, 11,3 mm, 15,1 mm, 18,1 mm und 19,1 mm.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

Während die Erfindung im Detail in den Zeichnungen und der vorangegangenen Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die explizit offenbarten Ausführungsformen beschränkt.

### Bezugszeichenliste

- 1: Kugelkäfig
- 2: erster Halteabschnitt
- 3: zweiter Halteabschnitt
- 4: Basisabschnitt
- 5: Durchbrechungen
- 6: Stege
- 7: Wälzkörper
- A-A: Symmetrieachse entlang der Längserstreckung
- B-B: Symmetrieachse quer zur Längserstreckung
- C-C: Symmetrieachse im Halteabschnitt quer zur Längserstreckung

## Patentansprüche

1. Teleskopauszug mit in einer Längsrichtung gegeneinander verfahrbaren Schienenelementen und einem Kugelkäfig, wobei der Kugelkäfig (1) einen Basisabschnitt (4) und einen ersten Halteabschnitt (2) und einen zweiten Halteabschnitt aufweist, die sich seitlich des Basisabschnitts (4) in Längsrichtung erstrecken, so dass der Kugelkäfig einen im Wesentlichen U-förmigen Querschnitt aufweist, wobei zwei freie Schenkel durch den ersten (2) und den zweiten (3) Halteabschnitt gebildet werden, die durch den Basisabschnitt (4) miteinander verbunden sind, und wobei in dem ersten Halteabschnitt (2) und in dem zweiten Halteabschnitt (3) Durchbrechungen (5) vorgesehen sind, die entlang der Längsrichtung nebeneinander angeordnet und durch Stege (6) voneinander getrennt sind, und in welchen Wälzkörper (7) angeordnet sind, wobei der Kugelkäfig (1) wenigstens vier Wälzkörper (7) in dem ersten Halteabschnitt (2) aufweist, wobei die Abstände von wenigstens vier in Längsrichtung aufeinanderfolgenden Wälzkörpern (7) in dem ersten Halteabschnitt (2) zueinander jeweils voneinander verschieden sind, wobei die Abstände keine Summe aus zwei aufeinanderfolgenden Abständen dieser wenigstens vier aufeinanderfolgenden Wälzkörper (7) sind und die Abstände von in Längsrichtung aufeinanderfolgenden Wälzkörpern (7) zueinander von beiden Enden des Kugelkäfigs (1) zur Mitte des Kugelkäfigs (1) zunehmen,
**dadurch gekennzeichnet, dass** die Abstände der wenigstens vier in Längsrichtung aufeinanderfolgenden Wälzkörper (7) zueinander jeweils kein ganzzahliges Vielfaches eines anderen Abstandes dieser vier aufeinanderfolgenden Wälzkörper (7) sind.

2. Teleskopauszug gemäß Anspruch 1, **dadurch gekennzeichnet, dass** die Durchbrechungen (5) und Stege (6) in dem zweiten Halteabschnitt (3) sowie die in den Durchbrechungen (5) angeordneten Wälzkörper (7) jeweils gegenüber denen in dem ersten Halteabschnitt (2) angeordnet sind.

3. Teleskopauszug gemäß einem der vorangehenden Ansprüche, **dadurch gekennzeichnet, dass** wenigstens die Hälfte der Abstände der Wälzkörper (7) in dem ersten Halteabschnitt (2), vorzugsweise wenigstens drei Viertel, besonders bevorzugt alle, zueinander jeweils voneinander verschieden sind, wobei wenigstens die Hälfte, vorzugsweise wenigstens drei Viertel, besonders bevorzugt alle, der Abstände kein ganzzahliges Vielfaches eines anderen Abstandes sind und wenigstens die Hälfte, vorzugsweise wenigstens drei Viertel, besonders bevorzugt alle, der Abstände keine Summe von zwei benachbarten, aufeinanderfolgenden Abständen eines jeweiligen Abstandes sind.

4. Teleskopauszug gemäß einem der vorangehenden Ansprüche, **dadurch gekennzeichnet, dass** in dem ersten Halteabschnitt (2) höchstens 30, bevorzugt höchstens 25, besonders bevorzugt höchstens 20 Wälzkörper (7), angeordnet sind.

5. Teleskopauszug gemäß einem der vorangehenden Ansprüche, **dadurch gekennzeichnet, dass** der Kugelkäfig aus einem Kunststoff hergestellt ist, ausgewählt aus der Gruppe, bestehend aus, Polypropylen, Polyamid und Polyoxymethylen.

6. Teleskopauszug gemäß einem der vorangehenden Ansprüche, **dadurch gekennzeichnet, dass** die Schienenelemente aus einem elektrogalvanisch verzinkten oder elektrogalvanisch verzinkten und passivierten Material bestehen.

## Claims

1. A telescopic slide with rail elements which can be displaced in longitudinal directions against one another and a bearing cage, wherein the bearing cage (1) comprises a base section (4) and a first retaining section (2) and a second retaining section which extend laterally of the base section (4) in the longitudinal direction, so that the bearing cage has an essentially U-shaped cross section, wherein two free sides are formed by the first (2) and the second (3) retaining section which are connected together via the base section (4), and wherein apertures (5) are provided in the first retaining section (2) and in the second retaining section (3) which are disposed adjacent to each other along the longitudinal direction and which are separated by webs (6), and in which roller members (7) are disposed, wherein the bearing cage (1) comprises at least four roller members (7) in the first retaining section (2), wherein each of the spacings of at least four successive roller members (7) in the longitudinal direction in the first retaining section (2) differ with respect to each other, wherein the spacings are not the sum of two successive spacings of these at least four successive roller members (7) and the spacings of successive roller members (7) in the longitudinal direction with respect to each other increase from both ends of the bearing cage (1) to the centre of the bearing cage (1), **characterized in that** each of the spacings of the at least four successive roller members (7) in the longitudinal direction with respect to each other are not an integral multiple of another spacing of these four successive roller members (7).

2. The telescopic slide as claimed in claim 1, **characterized in that** the apertures (5) and webs (6) in the second retaining section (3) as well as the roller members (7) disposed in the apertures (5) are respectively disposed opposite to those in the first retaining section (2).

3. The telescopic slide as claimed in one of the preceding claims, **characterized in that** at least half of the spacings of the roller members (7) in the first retaining section (2), preferably at least three quarters, particularly preferably all thereof, differ with respect to each other, wherein at least half, preferably at least three quarters, particularly preferably all, of the spacings are not an integral multiple of another spacing and at least half, preferably at least three quarters, particularly preferably all, of the spacings are not a sum of two adjacent successive spacings of a respective spacing.

4. The telescopic slide as claimed in one of the preceding claims, **characterized in that** at most 30, preferably at most 25, particularly preferably at most 20 roller members (7) are disposed in the first retaining section (2).

5. The telescopic slide as claimed in one of the preceding claims, **characterized in that** the bearing cage is produced from a synthetic material selected from the group consisting of polypropylene, polyamide and polyoxymethylene.

6. The telescopic slide as claimed in one of the preceding claims, **characterized in that** the rail elements consist of an electrogalvanized or electrogalvanized and passivated material.

## Revendications

1. Rallonge télescopique comprenant des éléments de glissière déplaçables l'un vers l'autre en direction longitudinale et une cage à billes, la cage à billes (1) comportant une partie de base (4) ainsi qu'une première partie de retenue (2) et une seconde partie de retenue qui s'étendent en direction longitudinale sur les côtés de la partie de base (4), de sorte que la cage à billes présente une section transversale sensiblement en forme de U, deux branches libres étant formées par la première (2) et la seconde (3) partie de retenue, qui sont reliées entre elles par la partie de base (4), et des ouvertures (5) étant prévues dans la première partie de retenue (2) et dans la seconde partie de retenue (3), lesquelles sont disposées côte à côte le long de la direction longitudinale et sont séparées les unes des autres par des nervures (6), et dans lesquelles sont disposés des corps de roulement (7), la cage à billes (1) comportant au moins quatre corps de roulement (7) dans la première partie de retenue (2), les espacements mutuels d'au moins quatre corps de roulement (7) qui se succèdent dans la direction longitudinale dans la première partie de retenue (2) étant chacun différent les uns des autres, lesdits espacements n'étant pas la somme de deux espacements successifs desdits au moins quatre corps de roulement (7) successifs et les espacements de corps de roulement (7) qui se succèdent dans la direction longitudinale augmentant depuis les deux extrémités de la cage à billes (1) jusqu'au centre de la cage à billes (1),
**caractérisée en ce que**
les espacements mutuels des au moins quatre corps de roulement (7) se succédant dans la direction longitudinale ne sont pas chacun un multiple entier d'un autre espacement desdits quatre corps de roulement (7) successifs.

2. Rallonge télescopique selon la revendication 1, **caractérisée en ce que** les ouvertures (5) et les nervures (6) dans la seconde partie de retenue (3) ainsi que les corps de roulement (7) disposés dans les ouvertures (5) sont disposés respectivement en regard de celles situées dans la première partie de retenue (2).

3. Rallonge télescopique selon l'une des revendications précédentes, **caractérisée en ce qu'**au moins la moitié des espacements mutuels des corps de roulement (7) dans la première partie de retenue (2), de préférence, au moins trois quart, et de manière particulièrement préférée, tous les espacements sont chacun différent les uns des autres, au moins la moitié, de préférence, au moins trois quart, et de manière particulièrement préférée, tous les espacements n'étant pas un multiple entier d'un autre espacement, et au moins la moitié, de préférence, au moins trois quart, et de manière particulièrement préférée, tous les espacements n'étant pas la somme de deux espacements adjacents successifs d'un espacement respectif.

4. Rallonge télescopique selon l'une des revendications précédentes, **caractérisée en ce que** sont disposés dans la première partie de retenue (2) au maximum 30, de préférence au maximum 25, de manière particulièrement préférée, au maximum 20 corps de roulement (7).

5. Rallonge télescopique selon l'une des revendications précédentes, **caractérisée en ce que** la cage à billes est réalisée en une matière synthétique, choisie dans le groupe comprenant du polypropylène, du polyamide et du polyoxyméthylène.

6. Rallonge télescopique selon l'une des revendications précédentes, **caractérisée en ce que** les éléments de glissière consistent en un matériau électrogalvaniquement zingué ou électrogalvaniquement passivé.
